# EUROPEAN PATENT SPECIFICATION

(11) **EP 1 029 448 B1**
(45) Date of publication and mention of the grant of the patent: **22.05.2002**
(21) Application number: 98950116.8
(22) Date of filing: 23.10.1998
(51) Int. Cl.: A01K 1/015, A01N 25/04, B01J 20/12

(54) **BACTERIOSTATIC AGENT, PREPARATION AND UTILISATION THEREOF**
ANTIBAKTERIELLES MITTEL, SEINE HERSTELLUNG UND VERWENDUNG
AGENT BACTERIOSTATIQUE, SA PREPARATION ET SON UTILISATION

(30) Priority: 24.10.1997 FR 9713366
(43) Date of publication of application: 23.08.2000
(73) Proprietor: TOLSA S.A., E-28001 Madrid (ES)
(72) Inventor: MARTY, Bernard, F-13004 Marseille (FR); PERNIN, Marc, F-13600 La Ciotat (FR)
(74) Representative: Ungria Lopez, Javier
(86) International application number: ES9800288
(87) International publication number: WO9921413

(56) References cited:
- EP-A- 0 109 275
- EP-A- 0 566 804
- WO-A-90/07273
- FR-A- 2 561 865
- FR-A- 2 629 678

## Description

The present invention relates to a compound consisting of a carrier and a bactericidal active ingredient; compound in which the bactericidal active ingredient can be found, on the one hand, absorbed in the carrier, and on the other hand, in a free form.

The present invention also refers to a method for preparing the said compound.

Likewise, the invention refers to the preparation of the said compound, its use as a bacteriostatic agent, as well as the absorbent compositions that include them.

Absorbent compounds, and in particular those used for animal bedding, are well known products.

One of the main problems that have to be worked out with such products is how to limit the growth of bacteria and microorganisms. A direct consequence of progress in this direction is not only an improvement of the animal bedding sanitary conditions, but also a constraint to the appearance of nauseating smells.

In an attempt to tackle this problem a number of solutions, e.g. including a bactericidal active ingredient in the animal bedding formulation, have been proposed, such as disclosed in document FR-A-2 629 678.

Adding such an additive to the formulation, however, does not solve the problem of bacterial growth within the animal bedding. Sure enough, the bactericidal active ingredient is made available immediately; i.e. it is not possible to control the duration of the efficacy of the agent.

The goal of the present invention is to introduce a compound that is not only immediately active, but also has a long-term efficacy, thanks to the progressive release of the bactericidal active ingredient in the absorbent composition.

Hence, the first objective of the present invention is a compound that comprises at least one microporous carrier, and at least one bactericidal active ingredient; compound in which the bactericidal active ingredient can be found, on the one hand, absorbed in the carrier, and on the other hand, in a free form.

A second objective of the present invention is a procedure comprising the following steps:
(a) the carrier is placed in contact with the bactericidal active ingredient to be absorbed, the carrier thus treated is then dried; step (a) can be repeated several times.
(b) the carrier from step (a) is placed in contact with the free bactericidal active ingredient.

An additional goal of the present invention is using a compound of this kind as a bacteriostatic agent in absorbent compositions for home, or even industrial, applications.

The absorbent compositions referred to are also a concern of the present invention.

The compound as per the invention thus combines very good availability of the bactericidal active ingredient in the animal bedding with temporal control of its efficacy. Indeed because of its structure, the bacteriostatic agent progressively releases the bactericidal active ingredient that is absorbed in the carrier. Such an effect can also be reinforced by including a film-forming agent. On the other hand, the free form of the bactericidal active ingredient is immediately available.

Other features and advantages of the present invention will become clear by reading the description and examples that follow.

As previously stated, the first objective of the present invention is a compound that comprises at least one microporous carrier, and at least one bactericidal active ingredient; compound in which the bactericidal active ingredient can be found, on the one hand, absorbed in the carrier, and on the other hand, in a free form.

We would like to specify that the term free refers to a compound that is not absorbed into the carrier but at most, adsorbed at the external surface of the latter. This term also refers to a bactericidal active ingredient that would be neither absorbed nor fixed by adsorption in or onto this carrier.

In terms of weight, the proportion of the absorbed active ingredient with respect to the total amount of agent represents, to be more precise, between 40 and 60%.

The total amount of bactericidal active ingredient with respect to the weight of the compound represents, to be more precise, from 0.1 to 10% in weight. Preferably, the total amount of bactericidal active ingredient is in the range of 1 to 8% in weight with respect to the same reference.

The carrier that is included in the formulation of the compound as per the invention is first selected from microporous products.

In particular, the carrier exhibits a specific surface of at least 40 m²/g, and more specifically between 50 m²/g and 400 m²/g. In one particular way of implementation, this specific surface BET is in the range of 120 m²/g and 300 m²/g. The specific surface is determined following the method of BRUNAUER - EMMET - TELLER described in the Journal of the American Chemical Society, Vol. 60, pp. 309, 1938 corresponding to norm NFT 45007 (November 1987).

On the other hand, the said carrier has a granule size between 1 and 300 µm, and preferably between 1 and 40 µm.

In one particularly advantageous way of implementing the present invention, the carrier is more specifically selected from precipitated silica, silica gel, pyrogenated silica, modified silica, hydrophobic silica, kaolin, talcum or talcoid, or chalk; and each one on them can be used either by itself or in combination.

Regarding the bactericidal active ingredient, this is more specifically an organic agent.

Among the bactericidal active ingredients of this kind, one may specially consider bactericidal agents of the diphenyl ether family containing at least one halogen atom, and more specifically chloride, and/or at least one hydroxyl group, such as triclosan with formula 2,4,4'-trichloro-2'-hydroxyphenyl ether (Irgasan®DP300).

Triclosans such as 3,5-dichloro-(1,4-dichlorophenyl)-2-hydroxybenzamide (Irgasan®BS200) and 4,4'- dichloro-3-(trifluoromethyl) carbanilide (Irgasan®CF3) are also adequate.

Bactericidal agents such as farnesol, hexachlorophene, usnic acid, formol, tannins, and more specifically plant-derived tannins such as chestnut tree tannin and apple tree tannin, are also adequate.

The compound as per the invention can include one or several bactericidal agents. If a mixture of bactericidal active ingredients is used, all possible combinations can be considered, from using one bactericidal active ingredient absorbed and a second one as a free form, to using a mixture of several bactericidal active ingredients absorbed and a second mixture of bactericidal active ingredients in a free form.

In order to simplify the description that follows, reference will be made to a single bactericidal active ingredient in the compound, present both in an absorbed and a free form, with the understanding that this phrasing does no limit the invention to the use of these compounds.

According to a first way of implementing the invention, the compound takes the form of a liquid-phase suspension.

More specifically, the liquid phase is selected as not to produce a substantial diluting of the bactericidal active ingredient absorbed to the carrier. The term substantial refers to a dilution of at least 50% of the absorbed bactericidal active ingredient.

According to one particular way of implementation, the liquid phase is selected in such a way that if dilution of the bactericidal active ingredient occurs, this should not exceed 20%, and preferably 10%, of the amount of active ingredient absorbed.

The phase should be such as to produce little or not diluting of the free form of the bactericidal active ingredient. In this case, if the bactericidal active ingredient absorbed is the same as the free one, the condition previously stated according to which the liquid phase should not cause a substantial diluting of the absorbed agent, is checked.

However, a preferred way of implementing the present invention entails using a liquid phase that dissolves at least in part the free form of the bactericidal active ingredient.

According to this preferred way of implementation, the liquid phase is more specifically composed of a mixture containing the necessary and sufficient amount of solvent to dissolve, at least in part, the free bactericidal active ingredient, an a dispersant which is not a solvent for either the free bactericidal active ingredient or the absorbed bactericidal active ingredient.

It is better to use an amount of solvent such as to dissolve 90%, and more specifically 100%, of the free bactericidal active ingredient. Further, this amount is such as to allow little or no dilution of the bactericidal active ingredient absorbed in the carrier.

It is important to point out that both the solvent on the one hand, and the dispersant on the other, can be either a single product or a mixture of several ones.

The compound as per the invention can also include at least one film-forming agent.

A film-forming agent adequate for implementing the invention can be specifically any film-forming polymer that becomes permeable when in contact with an aqueous solution. In the scope of this invention, the term permeable denotes in the first place a water-insoluble film that modifies its structure in such a way as to create a certain porosity through which the absorbed bactericidal active ingredient can be released in a graded manner with time.

Some convenient film-forming agents are for example the polymers and copolymers derived from acrylic and methacrylic acids, polyvinyl pirrolidone, cellulose derivatives and shellac. These polymers and copolymers can be used either alone or as a mixture.

Among the cellulose derivatives, one may particularly consider carboxylated celluloses, such as carboxymethylcellulose and carboxyethylcellulose; and hydroxyalkylcelluloses such as hydroxymethylcellulose and hydroxyethylcellulose.

The amount of film-forming agent, when present in the compound as per the invention, is in the range of 0.1 to 5% in weight with respect to the weight of the compound.

The film-forming agent should be preferably in a form dissolved in the liquid phase of the compound.

According to another possible implementation, the film-forming agent at least partially coats the carrier to which the bactericidal active ingredient is absorbed.

A procedure for preparing the compound as per the invention will be described next.

It involves placing the carrier in contact with the bactericidal active ingredient to be absorbed, and then placing the resulting product in contact with the free bactericidal active ingredient.

According to a particularly advantageous variation of this way of implementation, the procedure is performed in two steps:
(a) the carrier is placed in contact with the bactericidal active ingredient to be absorbed, the carrier thus treated is then dried; step (a) can be repeated several times.
(b) the carrier from step (a) is placed in contact with the free bactericidal active ingredient.

According to a particular way of implementing the invention, step (a), in which the bactericidal active ingredient which is to be absorbed in placed in contact, is performed using a solvent of the said bactericidal active ingredient.

Among those solvents considered suitable, one should consider aliphatic monoalcohols containing between 1 and 10 carbon atoms, such as methanol or ethanol; polyalcohols such as glycol and its derivatives, such as monopropylene glycol and dipropylene glycol.

Even aldehydes or ketones having between 2 and 10 carbon atoms, such as for example acetone, can be used.

Aromatic esters such as for example ethyl phthalate may prove adequate.

Hydrocarbons containing between 5 and 10 carbon atoms like pentane, hexane and cyclohexane are also suitable.

More specifically, in this step (a) the carrier is placed in contact with a solution of bactericidal active ingredient.

Typically, the amount of solvent used is lower than the absorption capacity of the carrier, since the amount of bactericidal active ingredient in the solution is small.

Thus, a solution containing the solvent and the bactericidal active ingredient that is to be absorbed is prepared, and this solution is then sprayed onto the carrier.

In general, spraying may be carried out using any classical device, equipped for example with one or several nozzles, artichoke or sprinkler type or any other type. Another type of sprayer, termed turbine sprayer, can also be used.

The whole operation is performed under stirring.

As examples of suitable equipment to carry out the procedure, one could mention turbine mixers and rotary drums.

The contact is best carried out at room temperature, but using higher temperatures would still be within the frame of the present invention.

At the beginning of the contact, a carrier in powder form is obtained to which the bactericidal active ingredient is absorbed.

After soaking has been completed, a drying step is used.

Drying takes place at a temperature between room temperature and 70ºC.

In general, drying is carried out with air.

The drying time can be highly variable. However, as an indication it varies between 10 minutes and 2 hours.

Drying can be performed using any sort of equipment, whether fluidised bed or normal bed dryers

It is important to mention that the first step, that includes soaking and drying, can be performed several consecutive times, in order to increase the concentration of the bactericidal active ingredient absorbed in the carrier.

Step (b) of the procedure as per the invention consists in placing the free bactericidal active ingredient in contact with the product resulting from the previous step, and eventually dried.

More specifically, the contact is carried out in the presence of a liquid phase which does not cause substantial dilution of the bactericidal active ingredient absorbed in the carrier. The term substantial refers to a dilution of at least 50% of the absorbed bactericidal active ingredient.

According to one particular way of implementation, the liquid phase is selected in such a way that if dilution of the bactericidal active ingredient occurs, this should not exceed 20%, and preferably 10%, of the amount of active ingredient absorbed.

The phase should be such as to produce little or not diluting of the free form of the bactericidal active ingredient.

However, a preferred way of implementing the present invention involves using a liquid phase that dissolves at least in part the free form of the bactericidal active ingredient.

According to this preferred way of implementation, the liquid phase is more specifically composed of a mixture containing the necessary and sufficient amount of solvent to dissolve, at least in part, the free bactericidal active ingredient, an a dispersant which is not a dissolvent of either the free bactericidal active ingredient or the absorbed bactericidal active ingredient.

It is better to use an amount of solvent such as to dissolve 90%, and more specifically 100%, of the free bactericidal active ingredient. Further, this amount is such as to allow little or no dilution of the bactericidal active ingredient absorbed in the carrier.

The relative proportions of the solvent(s) and dispersant(s) mixture that compose the liquid phase depend, among other factors, on the nature of the bactericidal agent(s) and their solubility in the mixture components. It is important to mention that these contents may be determined by an expert in this field using perfectly standard methods.

As an indication, however, the amount of solvent for the free bactericidal active ingredient in relation to the amount of dispersant is in the range of 0.1 to 100% in weight. More specifically, the amount of solvent for the free bactericidal active ingredient is in the range of 0.1 an 80% in weight, and preferably between 0.1 and 70% in weight.

Among suitable solvents are those that have been used in the first step.

Among usable dispersants one could name essentially, and as particularly advantageous, water.

The amount of liquid phase can also be highly variable. But it is better to use enough as to yield a suspension with a compound concentration as per the invention in the range of 1 to 30% in weight.

In this second step, the contact can be made using any kind of known device, such as classical mixers, rotary drum-type, reactors equipped with a stirring system. Systems such as fluidised beds can also be used.

Addition of film-forming agent(s) can be done at step (a) or in between step (a) and (b).

Thus, in case the film-forming agent and the bactericidal active ingredient are added at step (b), a mixture including the film-forming agent and the bactericidal active ingredient in liquid phase is prepared as previously described, and this suspension is then placed in contact with the carrier obtained in the first step. Carrying out this procedure in two steps would still be within the frame of the invention.

If the film-forming agent is added before placing in contact the carrier from the previous step with the free bactericidal active ingredient, the carrier made of the absorbed bactericidal active ingredient is placed in contact with the film-forming agent, and the resulting product is then dried.

It should be noted that the film-forming agent can be added as such, or preferably in the form of a solution. We specify that the solution should be such as not to produce any redilution of the absorbed bactericidal active ingredient. This can be accomplished by controlling on the one hand the nature of the solvent of the film-forming agent and/or the amount of solvent.

Thus, as previously mentioned, once the said carrier has been placed in contact with the film-forming agent, it is preferable to perform a drying step.

The conditions of this step are the same as those previously detailed for step (a), and therefore will not be described here again.

Therefore, at the beginning of this carrier mixing procedure, that includes the absorbed bactericidal active ingredient, and eventually the film-forming agent, with the free bactericidal active ingredient, a compound is obtained that adopts the form of a suspension.

As an additional advantage, the aforementioned compound is used as such, as a bacteriostatic agent for preparing absorbent compositions with a bacteriostatic effect both immediate and prolonged.

More specifically, the aforementioned compound can be used as an additive for absorbent compositions for home usage, such as animal bedding, and also as an additive for industrial usage.

Another objective of the present invention is an absorbent composition including the mentioned compound as an additive serving as bacteriostatic agent.

Preferentially, the absorbent composition as per the invention is an animal bedding.

According of this preferred way of implementing the invention, the animal bedding comprises at least an absorbent mineral agent selected from either clays of the polygorskite type such as atapulgite, montmorillonites such as bentonite and smectite, sepiolite, its mixing or mixtures that contain them, cellulose waste such as sawdust, paper manufacture waste.

These can also contain standard additives, such as perfumes or substances attractive for the animal in question. For example, valerian, honeysuckle, mint, vanilla can be used for this purpose. Absorbent compositions bound for this usage may even contain dyes, polymers or copolymers with a water-binding or water-containing role.

Therefore the content of bacteriostatic agent in the compound as per the invention in the absorbent composition, is in the range of 0.5 and 5%, and preferably between 0.5 and 2%.

The absorbent compositions, regardless of their subsequent use, are prepared spraying the compound as per the invention.

It is worth mentioning that the suspension containing the compound as per the invention may also contain other additives like, for example, perfumes.

Typically, the preparation of absorbent compounds entails separately spraying the several additives of the final absorbent composition, after having sieved the absorbent mineral agent.

In general, the absorbent mineral agent is placed onto a conveyor belt.

Thus, while passing on the conveyor belt, the absorbent agent must have been placed in contact with the several required additives, then dried so that it can be directly put into bags.

Drying is performed in the classic manner, i.e. under air, at a temperature ranging from room temperature to 60ºC.

Specific examples, though by no means limiting to the invention, are presented next.

### EXAMPLE 1

Ten kilograms of precipitated silica were placed in a 100 liter-capacity bowl of a Nautamix-type mixer decanter.

A solution of triclosan (Irgasan®DP3000) in ethanol was sprayed over the silica by means of a nozzle located at the upper end of the mixer.

This process is carried out under stirring.

When the silica is completely soaked with solution, the solvent is evaporated by increasing the temperature to 40ºC under partial vacuum and continuous stirring.

Once all the alcohol has been evaporated, the silica is poured off and then dispersed in an Irgasan solution containing water and dipropylene glycol (35/65).

The bacteriostatic agent thus obtained, which is in a dispersion form, contains 7.5% in weight of total triclosan, 50% of which is found in a free form.

The aforementioned suspension is then sprayed onto atapulgite, to obtain a content of bacteriostatic agent on the atapulgite of 1%.

### EXAMPLE 2

Kaolin powder and a solution of Triclosan in methanol were simultaneously entered, though using independent nozzles, into the bowl of a Hosokawa type turbine mixer.

The powder thus soaked was dried in a hot fluidized bed under vibration in order to evaporate the methanol.

Once all the alcohol has been evaporated, the silica is poured off and then dispersed in an Irgasan solution containing water and dipropylene glycol (35/65).

The dispersion contains 7.5% in weight of total bactericidal active ingredient, 50% of which is found in a free form.

The aforementioned suspension is then sprayed onto atapulgite, to obtain a content of bacteriostatic agent on the atapulgite of 1%.

### EXAMPLE 3

Fifty kilograms of precipitated silica were placed in the bowl of a Glatt-type dryer-granulator with fluidized air bed.

After having made the silica fluid, a solution of triclosan (Irgasan®DP3000) in a mixture of ethanol-acetone (59/50) was sprayed onto the powder at room temperature.

Once the silica is soaked with solution, the solvent is evaporated by increasing the temperature.

Once the solvent has been evaporated, the resulting product is dispersed in a solution of triclosan containing water and dipropylene glycol (35/65).

The dispersion contains 7.5% in weight of total bactericidal active ingredient, 50% of which is found in a free form.

The aforementioned suspension is then sprayed onto atapulgite, to obtain a content of bacteriostatic agent on the atapulgite of 1%.

### EXAMPLE 4

The same procedure as for example 1 was followed, except that the water/ dipropylene glycol solution contains, in addition to the free bactericidal active ingredient (Irgasan®DP3000), an acrylic resin Eudragit® (Rhom & Haas) as a film-forming agent, in order to obtain a 2% content of this agent in the bacteriostatic compound.

### EXAMPLE 5

The purpose of this example is to compare the animal bedding yields as per the invention with known yields.

Thus, the following animal beddings were assayed:
- A comparison: atapulgite alone
- B comparison: atapulgite and free triclosan alone
- C comparison: atapulgite and a compound with an absorbed bactericidal active ingredient alone (obtained following the soaking procedure of example 1 except that the water/dipropylene glycol solution used to disperse the silica does not contain Triclosan)
- D invention: atapulgite and a compound with absorbed and free-form bactericidal active ingredient (obtained according to example 1)

In cases B, C and D, the total triclosan content in the absorbent composition is 0.075% in weight.

To check the anti-microbial activity of the compound present, the following procedure is used:

Fifty grams of each sample, to which 200ml of nutrient broth were added (Nutrient Broth, Difco), were weighted into a sterile container.

The containers were allowed to stand at room temperature for three days.

Samples, 1.5 ml in volume, were taken at regular time intervals (30 minutes).

The growth of microorganisms was monitored by measuring the evolution of the optical density (at 629nm) in time.

On a second stage, the growth was monitored for six days, measuring the optical density once a day.

The containers were incubated at 22ºC.

Microbial counts were performed in parallel

The results were as follows:

| Samples Time (days) | Number of microorganisms / ml | | | |
|---|---|---|---|---|
| | A Comp. | B Comp. | C Comp. | D Invention |
| t0 | 2.5 10³ | 4.0 10² | 3.8 10² | 0.8 10² |
| t1 | 2.1 10⁵ | 1.9 10³ | 2.5 10² | 0.7 10² |
| t2 | 1.6 10⁷ | 3.8 10⁵ | 1.6 10² | 0.2 10² |
| t3 | 1.1 10⁹ | 2.5 10⁷ | 0.4 10² | 0.1 10² |
| t4 | 4.9 10⁹ | >5.0 10⁹ | 0.2 10² | 0.2 10² |
| t5 | >5.0 10⁹ | >5.0 10⁹ | 0.2 10² | 0.1 10² |
| T6 | >5.0 10⁹ | >5.0 10⁹ | 0.3 10² | 0.1 10² |

This table clearly shows that the bacteriostatic agent as per the invention is considerably more active, and that an unexpected synergic effect occurs between the two forms of bactericidal active ingredient.

## Claims

1. A compound including at least one microporous carrier and at least one bactericidal active ingredient; compound in which the bactericidal active ingredient can be found, on the one hand, absorbed in the carrier, and on the other hand, in a free form; and in which the carrier with the absorbed bactericidal active ingredient has been dried prior to being placed in contact with the free form of the bactericidal active ingredient.

2. A compound according to the previous claim, **characterised by** the fact that the proportion of absorbed bactericidal active ingredient constitutes from 40 to 60% in weight, in relation to the total amount of bactericidal active ingredient.

3. A compound according to any of the previous claims, **characterised by** the fact that the total amount of bactericidal active ingredient constitutes from 1 to 10% in weight in relation to the compound, and preferably between 1 and 8% in weight in relation to the same reference.

4. A compound according to any of the previous claims, **characterised by** the fact that the carrier has a specific surface of at least 40 m²/g, and more specifically in the range of 50 m²/g and 400 m²/g.

5. A compound according to any of the previous claims, **characterised by** the fact that the granule size of the compound is in the range of 1 and 300 µm, and preferably between 1 and 40 µm.

6. A compound according to any of the previous claims, **characterised by** the fact that the carrier is selected from either precipitated silica, silica gel, pyrogenated silica, modified silica, kaolin, talcum or talcoid, or chalk; each one of them either alone or in combination.

7. A compound according to any of the previous claims, **characterised by** the fact that the bactericidal active ingredient is an organic bactericidal active ingredient.

8. A compound according to the previous claim, **characterised by** the fact that the bactericidal active ingredient is selected from either 2,4,4'-trichloro-2'-hydroxyphenyl ether (Irgasan®DP300), 3,5-dichloro-(1,4-dichlorophenyl)-2-hydroxybenzamide (Irgasan®BS200), 4,4'-dichloro-3-(trifluoromethyl) carbanilide (Irgasan®CF3), farnesol, usnic acid, formol or tannins.

9. A compound according to any of the previous claims, **characterised by** the fact that it adopts the form of a suspension in a liquid phase.

10. A compound according to the previous claim, **characterised by** the fact that the liquid phase is such that it does not produce a substantial diluting of the bactericidal active ingredient absorbed in the carrier.

11. A compound according to any of the previous claims, **characterised by** the fact that the liquid phase dilutes at least partially the free form of the bactericidal active ingredient.

12. A compound according to any of the previous claims, **characterised by** the fact that the liquid phase is made of a mixture that includes the amount of solvent required to dissolve, at least in part, the free bactericidal active ingredient, and a dispersant which is not a solvent for either the free bactericidal active ingredient or the absorbed bactericidal active ingredient.

13. A compound according to any of the previous claims, **characterised by** the fact that it also includes al least one film-forming agent.

14. A compound according to the previous claim, **characterised by** the fact that the film-forming agent is selected from polymers able to form a film that becomes permeable when in contact with an aqueous solution.

15. A compound according to the previous claim, **characterised by** the fact that the film-forming agent is selected from polymers or copolymers derived from acrylic and methacrylic acids, polyvinyl pirrolidone, cellulose derivatives and shellac; used either alone or in a mixture.

16. A compound according to either claim 13 or 14, **characterised by** the fact that the amount of film-forming agent is within the range of 0.1 to 5% in weight, in relation to the compound.

17. A compound according to any one of claims 13 to 16, **characterised by** the fact that the film-forming agent is, at least in part, in a soluble state in the liquid phase.

18. A procedure for preparing a compound according to any one of claims 1 to 17, **characterised by** entailing the following steps:
(a) the carrier is placed in contact with the bactericidal active ingredient to be absorbed, the carrier thus treated is then dried; step (a) can be repeated several times.
(b) the carrier from step (a) is placed in contact with the free bactericidal active ingredient.

19. A procedure according to the previous claim, **characterised by** the fact that before carrying on step (b), the carrier coming from step (a) is placed in contact with a film-forming agent, and the resulting product is eventually dried.

20. A procedure according to claim 18, **characterised by** the fact that the contact between the carrier and the bactericidal active ingredient to be absorbed during step (a), takes place in the presence of a solvent of the said bactericidal active ingredient.

21. A procedure according to any one of claims 18 to 20, **characterised by** the fact that step (b) is carried out in the presence of a liquid phase that does not produce a substantial diluting of the bactericidal active ingredient absorbed in the carrier.

22. A procedure according to claim 21, **characterised by** the fact that step (b) is carried out in the presence of a liquid phase that, at least in part, dissolves the free form of the bactericidal active ingredient.

23. A procedure according to either claim 20 or 21, **characterised by** the fact that the liquid phase is a mixture that includes the amount of solvent required to dissolve, at least in part, the free bactericidal active ingredient, and a dispersant which is not a solvent for either the free bactericidal active ingredient or the absorbed bactericidal active ingredient.

24. The use of a compound according to any one of claims 1 to 17, or being obtained according to any one of claims 18 to 23, as a bacteriostatic agent in absorbent compositions for either home usage, such as animal bedding, or industrial usage.

25. Absorbent compositions that include the compound according to any one of claims 1 to 17, being obtained by spraying the said compound onto an absorbent mineral agent.

26. Absorbent compositions according to claim 25,
**characterised by** the fact that the content of the compound is in the range of 0.5 to 5%, and preferably between 0.5 and 2%.

27. Absorbent compositions according to any one of claims 25 to 26, **characterised by** the fact that the absorbent mineral agent is selected from either clays of the polygorskite type such as atapulgite, clays of the montmorillonite type such as bentonite and smectite, sepiolite, cellulose waste such as sawdust, paper manufacture waste.

## Patentansprüche

1. Produkt, umfassend mindestens einen mikroporösen Träger und mindestens einen bakteriziden Wirkstoff, wobei der bakterizide Wirkstoff in diesem Produkt einerseits in dem Träger absorbiert und andererseits in freier Form vorkommt, und wobei der Träger mit dem absorbierten bakteriziden Wirkstoff getrocknet wurde, bevor er mit der freien Form des bakteriziden Wirkstoffs in Kontakt gebracht wurde.

2. Produkt nach dem vorangehenden Anspruch, **dadurch gekennzeichnet, dass** der Anteil des absorbierten bakteriziden Wirkstoffs 40 bis 60 Gew.-%, bezogen auf die Gesamtmenge des bakteriziden Wirkstoffs, ausmacht.

3. Produkt nach einem der vorangehenden Ansprüche, **dadurch gekennzeichnet, dass** die Gesamtmenge des bakteriziden Wirkstoffs 1 bis 10 Gew.-%, bezogen auf das Produkt, und vorzugsweise zwischen 1 und 8 Gew.-%, bezogen auf das Produkt, ausmacht.

4. Produkt nach einem der vorangehenden Ansprüche, **dadurch gekennzeichnet, dass** der Träger eine spezifische Oberfläche von mindestens 40 m²/g und genauer gesagt im Bereich von 50 m²/g bis 400 m²/g aufweist.

5. Produkt nach einem der vorangehenden Ansprüche, **dadurch gekennzeichnet, dass** die Korngröße des Produkts im Bereich von 1 bis 300 µm und vorzugsweise zwischen 1 und 40 µm liegt.

6. Produkt nach einem der vorangehenden Ansprüche, **dadurch gekennzeichnet, dass** der Träger aus Kieselhydrogel, Silicagel, pyrogenem Siliciumdioxid, modifiziertem Siliciumdioxid, Kaolin, Talk oder einer talkartigen Verbindung oder Kreide, jeweils entweder allein oder in Kombination, ausgewählt ist.

7. Produkt nach einem der vorangehenden Ansprüche, **dadurch gekennzeichnet, dass** der bakterizide Wirkstoff ein organischer bakterizider Wirkstoff ist.

8. Produkt nach dem vorangehenden Anspruch, **dadurch gekennzeichnet, dass** der bakterizide Wirkstoff aus 2,4,4'-Trichlor-2'-hydroxyphenylether (Irgasan®DP300), 3,5-Dichlor-(1,4-dichlorphenyl)-2-hydroxybenzamid (Irgasan®BS200), 4,4'-Dichlor-3-(trifluormethyl)carbanilid (Irgasan®CF3), Farnesol, Usninsäure, Formol oder Tanninen ausgewählt wird.

9. Produkt nach einem der vorangehenden Ansprüche, **dadurch gekennzeichnet, dass** es die Form einer Suspension in einer flüssigen Phase annimmt.

10. Produkt nach dem vorangehenden Anspruch, **dadurch gekennzeichnet, dass** die flüssige Phase so beschaffen ist, dass sie keine wesentliche Verdünnung des in dem Träger absorbierten bakteriziden Wirkstoffs verursacht.

11. Produkt nach einem der vorangehenden Ansprüche, **dadurch gekennzeichnet, dass** die flüssige Phase zumindest teilweise die freie Form des bakteriziden Wirkstoffs verdünnt.

12. Produkt nach einem der vorangehenden Ansprüche, **dadurch gekennzeichnet, dass** die flüssige Phase aus einem Gemisch gebildet ist, das die Menge an Lösungsmittel, die erforderlich ist, um den freien bakteriziden Wirkstoff zumindest teilweise aufzulösen, und ein Dispergiermittel, welches kein Lösungsmittel für den freien bakteriziden Wirkstoff oder den absorbierten bakteriziden Wirkstoff ist, umfasst.

13. Produkt nach einem der vorangehenden Ansprüche, **dadurch gekennzeichnet, dass** es auch mindestens einen Filmbildner umfasst.

14. Produkt nach dem vorangehenden Anspruch, **dadurch gekennzeichnet, dass** der Filmbildner aus Polymeren ausgewählt wird, die einen Film bilden können, der beim Kontakt mit einer wässrigen Lösung durchlässig wird.

15. Produkt nach dem vorangehenden Anspruch, **dadurch gekennzeichnet, dass** der Filmbildner ausgewählt wird aus Polymeren oder Copolymeren, die sich von Acrylsäure und Methacrylsäure, Polyvinylpyrrolidon, Cellulosederivaten und Schellack ableiten, die entweder allein oder in einer Mischung verwendet werden.

16. Produkt nach Anspruch 13 oder 14, **dadurch gekennzeichnet, dass** die Menge des Filmbildners im Bereich von 0,1 bis 5 Gew.-%, bezogen auf das Produkt, liegt.

17. Produkt nach einem der Ansprüche 13 bis 16, **dadurch gekennzeichnet, dass** der Filmbildner zumindest teilweise in einem löslichen Zustard in der flüssigen Phase vorliegt.

18. Verfahren zum Herstellen eines Produkts nach einem der Ansprüche 1 bis 17, **dadurch gekennzeichnet, dass** es die folgenden Schritte umfasst:
(a) der Träger wird mit dem bakteriziden Wirkstoff, der absorbiert werden soll, in Kontakt gebracht und der so behandelte Träger wird anschließend getrocknet; Schritt (a) kann mehrmals wiederholt werden.
(b) der Träger von Schritt (a) wird mit dem freien bakteriziden Wirkstoff in Kontakt gebracht.

19. Verfahren nach dem vorangehenden Anspruch, **dadurch gekennzeichnet, dass** vor dem Durchführen von Schritt (b) der Träger, der sich aus Schritt (a) ergibt, mit einem Filmbildner in Kontakt gebracht wird und das resultierende Produkt gegebenenfalls getrocknet wird.

20. Verfahren nach Anspruch 18, **dadurch gekennzeichnet, dass** der Kontakt zwischen dem Träger und dem bakteriziden Wirkstoff, der in Schritt (a) absorbiert werden soll, in Gegenwart eines Lösungsmittels des bakteriziden Wirkstoffs stattfindet.

21. Verfahren nach einem der Ansprüche 18 bis 20, **dadurch gekennzeichnet, dass** Schritt (b) in Gegenwart einer flüssigen Phase durchgeführt wird, welche keine wesentliche Verdünnung des in dem Träger absorbierten bakteriziden Wirkstoffs verursacht.

22. Verfahren nach Anspruch 21, **dadurch gekennzeichnet, dass** Schritt (b) in Gegenwart einer flüssigen Phase durchgeführt wird, die zumindest teilweise die freie Form des bakteriziden Wirkstoffs auflöst.

23. Verfahren nach Anspruch 20 oder 21, **dadurch gekennzeichnet, dass** die flüssige Phase ein Gemisch ist, das die Menge an Lösungsmittel, die erforderlich ist, um den freien bakteriziden Wirkstoff zumindest teilweise aufzulösen, und ein Dispergiermittel, welches kein Lösungsmittel für den freien bakteriziden Wirkstoff oder den absorbierten bakteriziden Wirkstoff ist, umfasst.

24. Verwendung eines Produkts nach einem der Ansprüche 1 bis 17 oder eines Produkts, das nach einem der Ansprüche 18 bis 23 erhalten wird, als bakteriostatisches Mittel in absorbierenden Zusammensetzungen für den häuslichen Gebrauch, wie beispielsweise als Tierstreu, oder für den gewerblichen Gebrauch.

25. Absorbierende Zusammensetzungen, welche das Produkt nach einem der Ansprüche 1 bis 17 umfassen, die durch Sprühen des Produkts auf ein absorbierendes mineralisches Mittel erhalten werden.

26. Absorbierende Zusammensetzungen nach Anspruch 25, **dadurch gekennzeichnet, dass** der Gehalt des Produkts im Bereich von 0,5 bis 5 % und vorzugsweise zwischen 0,5 und 2 % liegt.

27. Absorbierende Zusammensetzungen nach einem der Ansprüche 25 bis 26, **dadurch gekennzeichnet, dass** das absorbierende mineralische Mittel aus Tonerden vom Palygorskit-Typ, wie etwa Attapulgit, Tonerden vom Montmorillonit-Typ, wie etwa Bentonit und Smektit, Sepiolith, Celluloseabfällen, wie etwa Sägemehl und Abfällen bei der Papierherstellung ausgewählt wird.

## Revendications

1. Composition incluant au moins un support microporeux et au moins un ingrédient actif bactéricide ; composition dans laquelle l'ingrédient actif bactéricide peut se trouver, d'une part, absorbé dans le support et, d'autre part, sous une forme libre ; et où le support dans lequel est absorbé l'ingrédient actif bactéricide a été séché avant d'être mis en contact avec la forme libre de l'ingrédient actif bactéricide.

2. Composition selon la revendication précédente, **caractérisée par le fait que** la proportion d'ingrédient actif bactéricide absorbé constitue de 40 à 60 % en masse, par rapport à la masse totale d'ingrédient actif bactéricide.

3. Composition selon l'une quelconque des revendications précédentes, **caractérisée par le fait que** la quantité totale d'ingrédient actif bactéricide constitue de 1 à 10 % en masse par rapport à la composition, et de préférence entre 1 et 8 % en masse par rapport à celle-ci.

4. Composition selon l'une quelconque des revendications précédentes, **caractérisée par le fait que** le support a une surface spécifique d'au moins 40 m²/g et plus spécifiquement dans le domaine de 50 m²/g à 400 m²/g.

5. Composition selon l'une quelconque des revendications précédentes, **caractérisée par le fait que** la taille des granules de la composition est dans le domaine de 1 à 300 µm, et de préférence de 1 à 40 µm.

6. Composition selon l'une quelconque des revendications précédentes, **caractérisée par le fait que** le support est choisi parmi la silice précipitée, le gel de silice, la silice pyrogénée, la silice modifiée, le kaolin, le talc ou talcoïde, ou la craie ; chacun d'eux seul ou en combinaison.

7. Composition selon l'une quelconque des revendications précédentes, **caractérisée par le fait que** l'ingrédient actif bactéricide est un ingrédient actif bactéricide organique.

8. Composition selon la revendication précédente, **caractérisée par le fait que** l'ingrédient actif bactéricide est choisi parmi le 2,4,4'-trichloro-2'-hydroxyphényléther (Irgasan®DP300), le 3,5-dichloro-(1,4-dichlorophényl)-2-hydroxybenzamide (Irgasan®BS200), le 4,4'-dichloro-3-(trifluorométhyl)carbanilide (Irgasan®CF3), le farnésol, l'acide usnique, le formol et les tannins.

9. Composition selon l'une quelconque des revendications précédentes, **caractérisée par le fait qu'**elle revêt la forme d'une suspension dans une phase liquide.

10. Composition selon la revendication précédente, **caractérisée par le fait que** la phase liquide est telle qu'elle ne produit pas de dilution sensible de l'ingrédient actif bactéricide absorbé dans le support.

11. Composition selon l'une quelconque des revendications précédentes, **caractérisée par le fait que** la phase liquide dilue au moins partiellement la forme libre de l'ingrédient actif bactéricide.

12. Composition selon l'une quelconque des revendications précédentes, **caractérisée par le fait que** la phase liquide est constituée par un mélange qui inclut la quantité de solvant nécessaire pour dissoudre, au moins en partie, l'ingrédient actif bactéricide libre, et un dispersant qui n'est pas un solvant pour l'ingrédient actif bactéricide libre ou pour l'ingrédient actif bactéricide absorbé.

13. Composition selon l'une quelconque des revendications précédentes, **caractérisée par le fait qu'**elle inclut aussi au moins un agent filmogène.

14. Composition selon la revendication précédente, **caractérisée par le fait que** l'agent filmogène est choisi parmi les polymères capables de former un film qui devient perméable quand il est en contact avec une solution aqueuse.

15. Composition selon la revendication précédente, **caractérisée par le fait que** l'agent filmogène est choisi parmi les polymères ou copolymères dérivés des acides acrylique et méthacrylique, la polyvinyl-pyrrolidone, les dérivés cellulosiques et la gomme laque, utilisés seuls ou en mélange.

16. Composition selon la revendication 13 ou 14, **caractérisée par le fait que** la quantité d'agent filmogène est dans le domaine de 0,1 à 5 % en masse par rapport à la composition.

17. Composition selon l'une quelconque des revendications 13 à 16, **caractérisée par le fait que** l'agent filmogène est, au moins en partie, dans un état soluble dans la phase liquide.

18. Procédé pour préparer une composition selon l'une quelconque des revendications 1 à 17, **caractérisé en ce qu'**il comprend les étapes suivantes :
(a) le support est mis en contact avec l'ingrédient actif bactéricide à absorber, le support ainsi traité est ensuite séché, l'étape (a) peut être répétée plusieurs fois ;
(b) le support provenant de l'étape (a) est mis en contact avec l'ingrédient actif bactéricide libre.

19. Procédé selon la revendication précédente, **caractérisé par le fait qu'**avant la mise en oeuvre de l'étape (b), le support provenant de l'étape (a) est mis en contact avec un agent filmogène, et le produit résultant est finalement séché.

20. Procédé selon la revendication 18, **caractérisé par le fait que** le contact entre le support et l'ingrédient actif bactéricide à absorber pendant l'étape (a) a lieu en présence d'un solvant dudit ingrédient actif bactéricide.

21. Procédé selon l'une quelconque des revendications 18 à 20, **caractérisé par le fait que** l'étape (b) est mise en oeuvre en présence d'une phase liquide qui ne produit pas de dilution sensible de l'ingrédient actif bactéricide absorbé dans le support.

22. Procédé selon la revendication 21, **caractérisé par le fait que** l'étape (b) est mise en oeuvre en présence d'une phase liquide qui, au moins en partie, dissout la forme libre de l'ingrédient actif bactéricide.

23. Procédé selon la revendication 20 ou 21, **caractérisé par le fait que** la phase liquide est un mélange qui inclut la quantité de solvant nécessaire pour dissoudre, au moins en partie, l'ingrédient actif bactéricide libre, et un dispersant qui n'est pas un solvant pour l'ingrédient actif bactéricide libre ou pour l'ingrédient actif bactéricide absorbé.

24. Utilisation d'une composition selon l'une quelconque des revendications 1 à 17, ou qui est obtenue selon l'une quelconque des revendications 18 à 23, comme agent bactériostatique dans des compositions absorbantes à usage domestique, comme les litières pour animaux, ou à usage industriel.

25. Compositions absorbantes qui incluent la composition selon l'une quelconque des revendications 1 à 17, qui sont obtenues par pulvérisation de ladite composition sur un agent minéral absorbant.

26. Compositions absorbantes selon la revendication 25, **caractérisées par le fait que** la teneur de la composition est dans le domaine de 0,5 à 5 %, et de préférence de 0,5 à 2 %.

27. Compositions absorbantes selon l'une quelconque des revendications 25 à 26, **caractérisées par le fait que** l'agent minéral absorbant est choisi parmi les argiles du type polygorskite comme l'attapulgite, les argiles du type montmorillonite comme la bentonite et la smectite, la sépiolite, les déchets cellulosiques comme la sciure de bois, les déchets de fabrication du papier.
